# EUROPÄISCHE PATENTSCHRIFT

(11) **EP 0 751 379 B1**
(45) Veröffentlichungstag und Bekanntmachung des Hinweises auf die Patenterteilung: **22.12.2004**
(21) Anmeldenummer: 96109659.1
(22) Anmeldetag: 17.06.1996
(51) Int. Cl.: G01F 23/00, G01F 17/00

(54) **Vorrichtung zur Ölstandskontrolle bei elektromotorischen Antrieben mit Getriebe**
Device for oil level control in an electric motor drive with transmission
Dispositif pour le contrôle du niveau de l'huile d'un moteur électrique avec transmission

(30) Priorität: 29.06.1995 DE 19523768
(43) Veröffentlichungstag der Anmeldung: 02.01.1997
(73) Patentinhaber: SIEMENS AKTIENGESELLSCHAFT, 80333 München (DE)
(72) Erfinder: Pfannschmidt, Bernd, Dipl.-Ing. (FH), 90574 Rosstal (DE)

(56) Entgegenhaltungen:
- DE-A- 2 505 976
- FR-A- 1 166 272
- GB-A- 2 096 778
- US-A- 4 715 221

## Beschreibung

Bei elektromotorischen Antrieben mit umlaufendem Getriebegehäuse, wie sie bei Radnabenantrieben für Schienenfahrzeuge verwendet werden, ist die Getriebeölstandskontrolle relativ schwierig. Wegen des umlaufenden Getriebegehäuses ist eine Ölstandskontrolle durch ein Schauglas oder mittels Meßstab deshalb nachteilig, weil vor jeder Kontrolle zuerst das Getriebegehäuse in die Lage gedreht werden muß, in der sich das Schauglas bzw. der Meßstab in der tiefsten Stellung befindet, so daß der jeweils vorhandene maximale Ölstand des Getriebeölsumpfes erfaßbar ist. Bei Schienenfahrzeugen mit z.B. acht Einzelradantrieben pro Fahrzeug wäre eine solche Prozedur also achtmal auszuführen.

Aus der DE 25 05 976 A1, ist eine Vorrichtung zur Überprüfung des maximalen und minimalen Flüssigkeitsstandes in einem Behälter mit einem Leitungssystem zumindest einer Pumpe und einer Einrichtung zur Anzeige der Flüssigkeitsförderung beschrieben. Dabei ist aber lediglich eine Minimal-Maximal-Kontrolle des Flüssigkeitsstandes möglich.

Aufgabe der Erfindung ist es, eine Vorrichtung zur Ölstandskontrolle zu schaffen, mittels der die Ölstandsüberprüfung und erforderlichenfalls das Nachfüllen oder Entleeren von Getriebeöl vereinfacht werden und wobei dies auch von der getriebefreien Seite des Elektromotors aus möglich ist.

Bei einer Vorrichtung zur Ölstandskontrolle bei elektromotorischen Antrieben mit Getriebe wird dies dadurch erreicht, dass die Pumpe zum Ansaugen des Getriebeöls aus dem Getriebegehäuse in einem Kontrollbehälter als auch zum Rückfördern des Getriebeöls vom Kontrollbehälter in das Getriebegehäuse nach der Ölstandsmessung eingerichtet ist, wobei der Kontrollbehälter eine Ölstandsanzeige aufweist. Dabei kann nach einer ersten Ausführung das Pumpengefäß oder Gehäuse der Pumpe gleichzeitig den Kontrollbehälter für die Getriebeölstandsmessung bilden oder es ist nach einer zweiten Ausführung in einer Förderleitung vom Getriebegehäuse zu einer Saug- und Druckpumpe ein eigenständiger Kontrollbehälter vorgesehen. Die erfindungsgemäße Vorrichtung ist besonders zur Ölstandskontrolle bei Schienenfahrzeugantrieben, wie Radnaben-Elektromotorantrieben für Niederflur-Schienenfahrzeuge, geeignet.

In den Patentansprüchen sind vorteilhafte Ausgestaltungen der erfindungsgemäßen Ölstandskontrollvorrichtung angegeben. Weitere Einzelheiten und Vorteile der Erfindung werden im folgenden anhand der Zeichnungsfiguren beschrieben.

Es zeigen:
Figur 1 in vereinfachter schematischer Darstellung einen elektromotorischen Radnabenantrieb mit umlaufendem Getriebegehäuse und einer erfindungsgemäßen Ölstandskontrollvorrichtung,

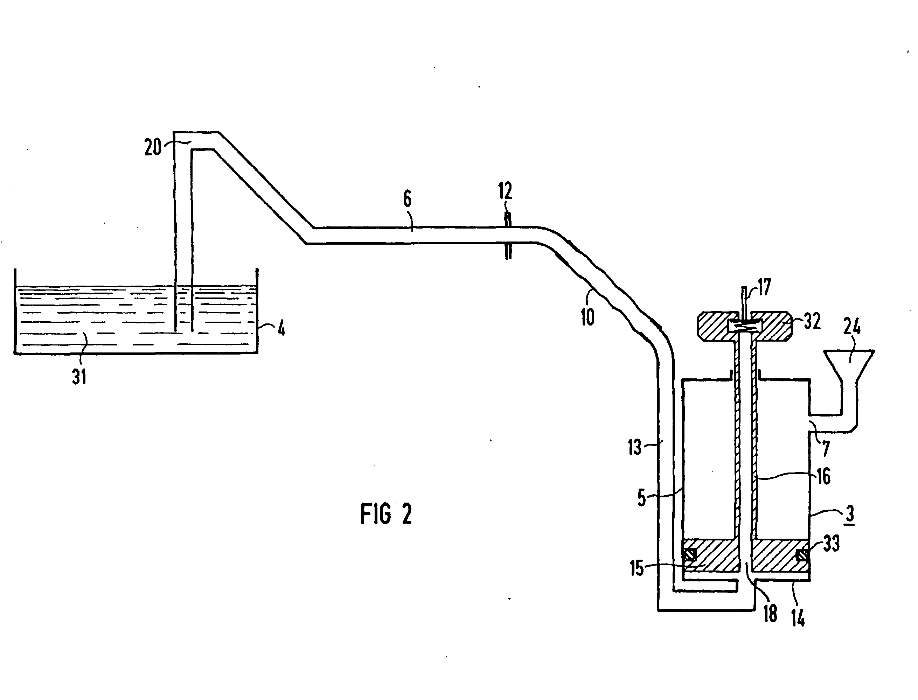

Figur 2 in vereinfachter schematischer Darstellung eine erste Ausführungsform einer erfindungsgemäßen Vorrichtung zur Ölstandskontrolle und zum Nachfüllen von Öl in das Getriebegehäuse eines nicht mehr näher gezeichneten Elektromotors, wobei Figur 2 den Zustand vor Beginn der Ölstandsmessung zeigt,
Figur 3 die Vorrichtung nach Figur 2, wobei nach einem ersten Meßschritt mittels einer Handpumpe durch Anheben des Kolbens Öl aus dem Ölsumpf des Getriebegehäuses in den Kontrollbehälter - hier das Handpumpengehäuse 5 - gesaugt wurde,

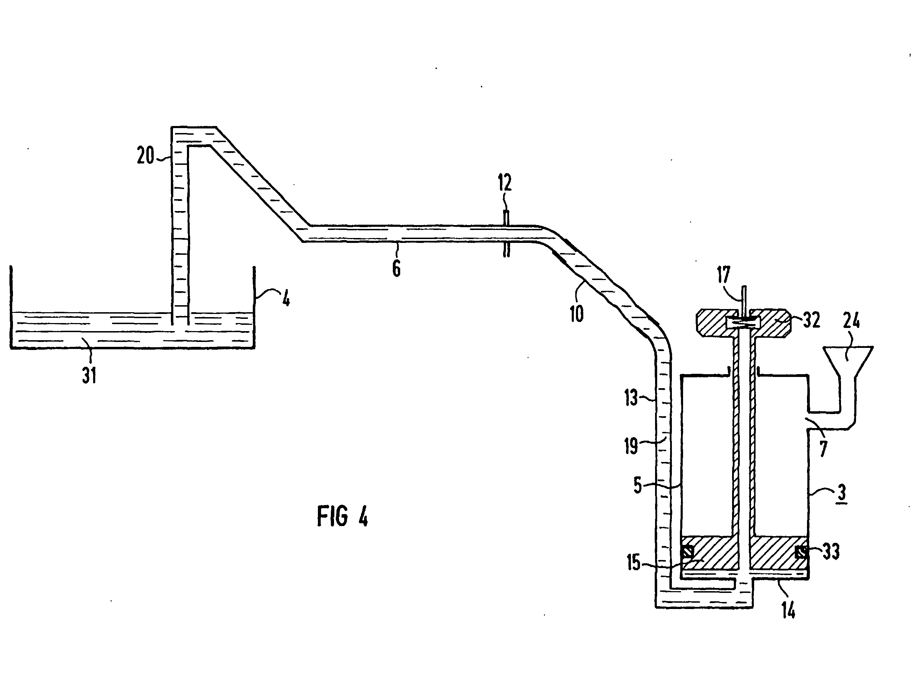

Figur 4 einen weiteren Meßzustand, wobei nach der Ölstandskontrolle und gegebenenfalls nach einem Auffüllen oder einem Ölablaß auf den maximalen oberen Ölstand durch Niederdrücken des Kolbens das Öl in das Getriebegehäuse zurückgefördert wurde,
Figur 5 einen weiteren Arbeitshub der Pumpe, durch den auch das noch in der Ölstandskontrollvorrichtung befindliche restliche Öl zurück in das Getriebegehäuse gefördert werden soll,
Figur 6 eine der Figur 2 entsprechende Stellung der Ölstandskontrollvorrichtung nach Beendigung der Ölstandsmessung bzw. eines Ölnachfüllens bzw. des Ablassens eines Ölüberschusses, wobei durch Lösen einer Kupplung 12 und nach dem Verschließen der motorseitigen Förderleitung 6 die Kontrollvorrichtung vom Antriebsmotor trennbar ist,
Figur 7 eine zweite Ausführungsform einer erfindungsgemäßen Vorrichtung zur Ölstandskontrolle, wobei in der Förderleitung vom Getriebegehäuse zu einer Saug- und Druckpumpe 22 ein eigenständiger Behälter 5' zur Ölstandskontrolle oder zum Nachfüllen bzw. Entleeren von Öl vorgesehen ist,
Figur 8 die Ausführung gemäß Figur 7, wobei mittels der Pumpe 22 Öl aus dem Getriebegehäuse 4 des Motors in den Kontrollbehälter bzw. Nachfüllbehälter 5' gesaugt wurde,
Figur 9 die Beendigung der Ölstandskontrolle, wobei die Pumpe 22 das Öl aus dem Behälter 5' zurück in das Getriebegehäuse 4 des Motors drückt.

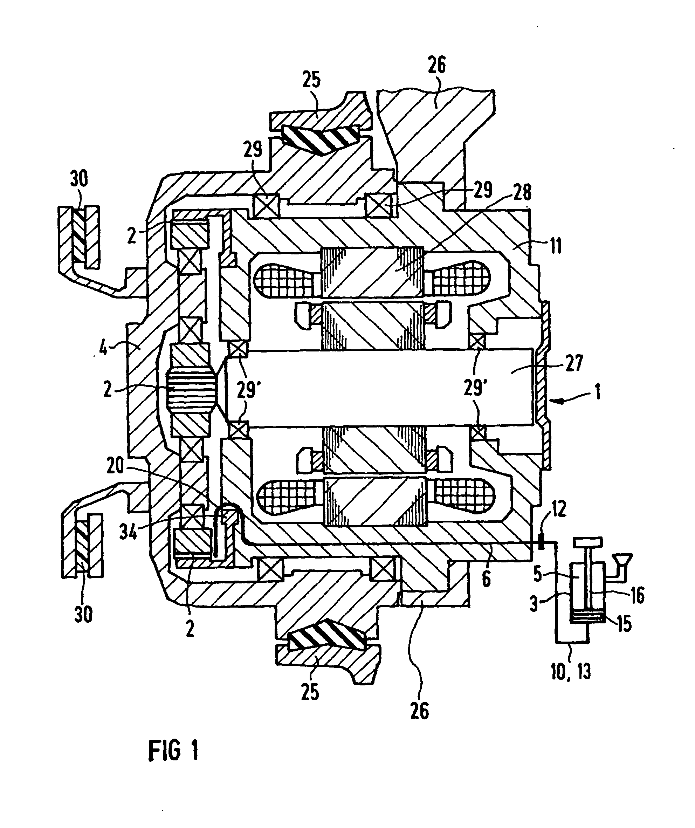

In Figur 1 ist ein elektromotorischer Antrieb 1 dargestellt, der im Ausführungsbeispiel in einem Einzelrad 25 eines nicht gezeichneten Schienenfahrzeuges als Radnabenmotor angeordnet und mit seinem Motorgehäuse 11 an der Fahrzeugschwinge bzw. am Fahrzeug-Drehgestell 26 befestigt ist. Der Elektromotor 1 umfaßt einen Ständer 28 und einen gegenüber dem Motorgehäuse 11 mittels Lager 29' drehbar gelagerten Läufer 27. Der Läufer 27 treibt über ein Getriebe 2 ein Getriebegehäuse 4 an, auf dem das Rad 25 sitzt. Über weitere Lager 29 stützt sich das Rad 25 mit einem radnabenförmigen Ansatz des Getriebegehäuses 4 auf dem Motorgehäuse 11 ab. Mit 30 ist eine getriebeseitig am Motor befestigte Bremsscheibe und mit 31 der Ölsumpf im Getriebegehäuse bezeichnet.

Zur Ölstandskontrolle des Ölsumpfes 31 im Getriebegehäuse 4 des Motors 1 ist im Motorblock eine Förderleitung 6 vorgesehen, die beim Ausführungsbeispiel an der dem Getriebe gegenüberliegenden Motorseite in einer verschließbaren Kupplung 12 endet. Wegen eines drehbaren Motorenteils 34 im Bereich des Hohlrades taucht die stehende Förderleitung 6 durch einen Endbogen 20 in den Ölsumpf 31 ein. An die Kupplung 12 der Förderleitung 6 ist beispielsweise unter Verwendung eines Schlauchstückes 10 eine Kontrollvorrichtung in Form einer Pumpe 3, im Ausführungsbeispiel einer Handpumpe, anschließbar. Das einen Kontrollbehälter 5 bildende Pumpengehäuse weist eine Steigleitung 13 auf, die einerseits mit dem Schlauchstück 10 verbindbar ist und andererseits in einer Öffnung im Boden 14 des Kontrollbehälters 5 mündet. Im Kontrollbehälter 5, der eine Ölnachfüllöffnung 7 mit einem Nachfüllstutzen 24 aufweist, ist ein Kolben 15 mit Kolbendichtung 33 angeordnet, wobei der Kolben über eine Kolbenstange 16 und einen Handgriff 32 betätigbar ist. Im Ausführungsbeispiel weist der Kolben 15 eine Bohrung 18 auf, deren Fortsetzung zu einem im Handgriff angeordneten Ventil 17 die rohrförmig ausgebildete Kolbenstange 16 bildet.

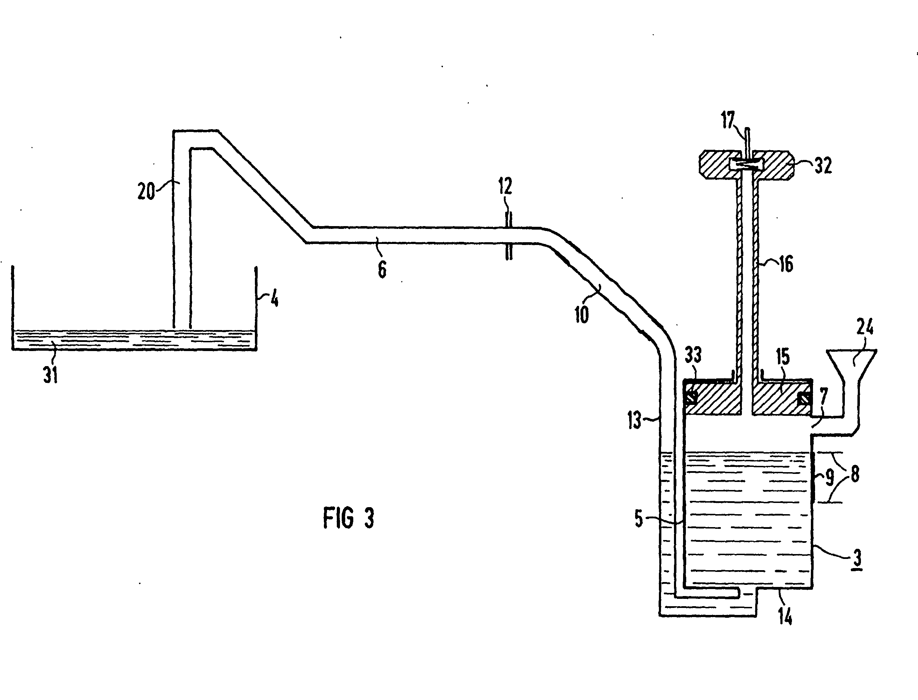

Zur Ölstandsmessung wird die Pumpe 3 bzw. ihr Kontrollbehälter 5 über die Kupplung 12 an die Förderleitung 6 des Motors 1 angeschlossen. Bei geschlossenem Ventil 17 wird dann die Pumpe 3 durch Anheben des Kolbens 5 mit Saugwirkung betätigt. Auf diese Weise wird, wie Figur 3 zeigt, Getriebeöl aus dem Getriebegehäuse 4 des Motors 1 in den Behälter 5 gesaugt. Umfaßt der Ölsumpf 31 im Getriebegehäuse die richtige Ölmenge, so stellt sich im Kontrollbehälter der zwischen Min und Max bezeichnete Füllstand ein. Bei einem gegen die Minimum-Markierung der Ölstandsanzeige 8 des Behälters 5 gehenden Füllstand ist angezeigt, daß über den Nachfüllstutzen 24 Öl bis zur Maximum-Markierung nachgefüllt werden soll. Bei einer eventuellen Überfüllung des Getriebegehäuses durch einen vorangegangenen Ölwechsel kann die überschüssige Ölmenge auch über den Stutzen 24 des Behälters 5 abgezogen oder ausgeschüttet werden. In einfacher Ausführung ist vorgesehen, daß der Kontrollbehälter 5 wenigstens teilweise aus durchsichtigem Material besteht oder ein Schauglas 9 aufweist.

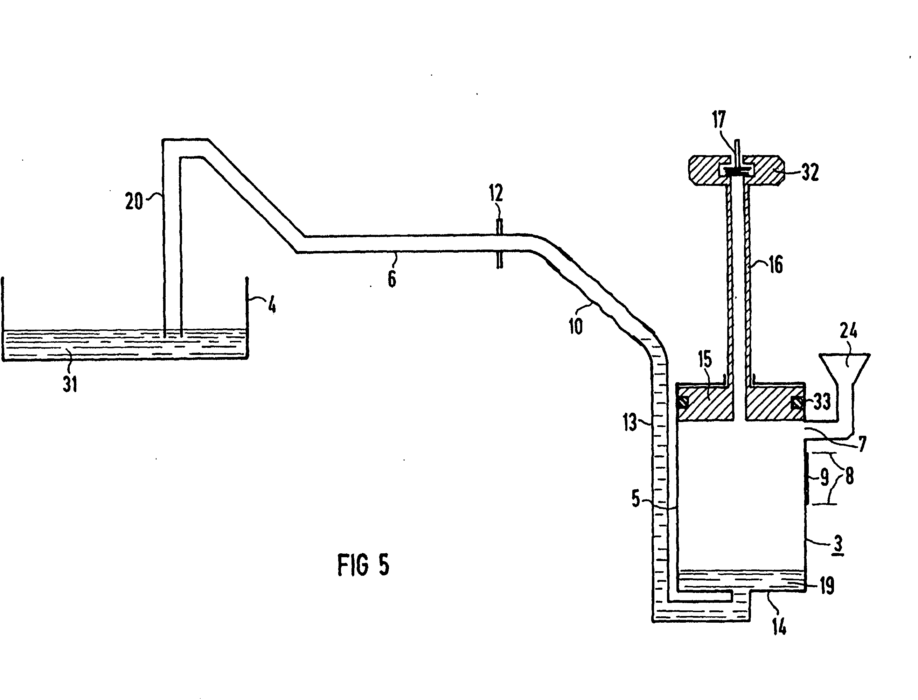

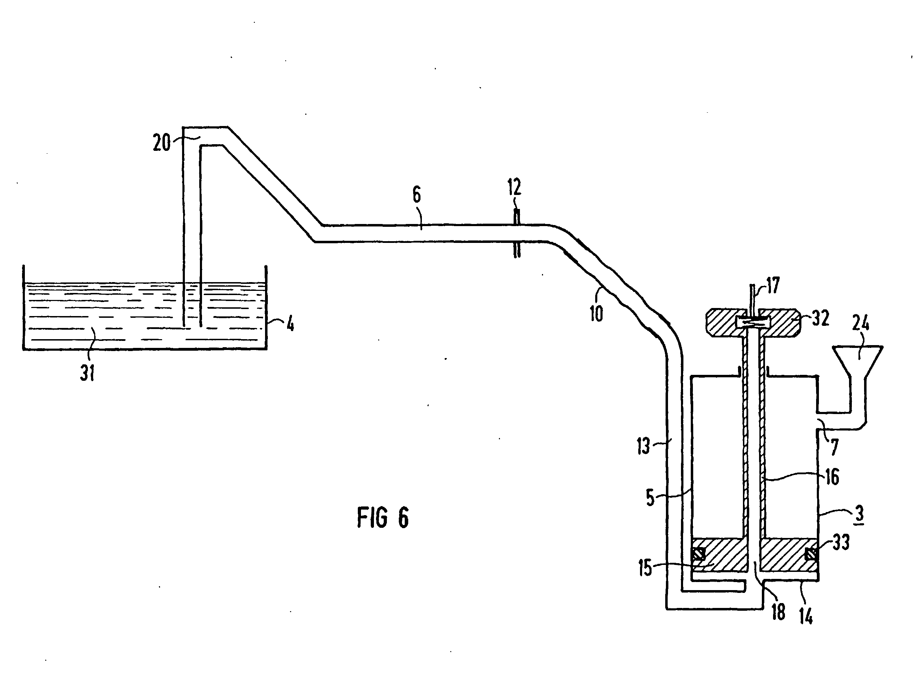

Nach der Ölstandskontrolle wird bei geschlossenem Ventil 17 der Kolben 15 der Pumpe 3 bis zum Boden 14 des Behälters 5 nach unten gedrückt und damit das Öl zurück in das Getriebegehäuse 4 gefördert. Damit auch die im Steigrohr 13 und in der Anschlußleitung 10 befindliche Restölmenge 19 in den Ölsumpf 31 fließt, ist wenigstens ein weiterer Pumpen-Förderhub vorgesehen. Wie Figur 5 zeigt, wird hierzu das Ventil 17 geöffnet, der Kolben 15 bei offenem Ventil angehoben, danach das Ventil 17 wieder geschlossen und der Kolben in seine Bodenlage nach Figur 6 gedrückt. Damit ist dann die Ölstandskontrollvorrichtung auch vom Restöl entleert, das Öl in das Getriebegehäuse 4 gefördert und die Ölstandskontrolle sowie gegebenenfalls das Korrigieren des Ölfüllstandes beendet. Jetzt kann die Kupplung 12 gelöst und verschlossen sowie die Ölstandskontrollvorrichtung vom Motor 1 abgenommen werden.

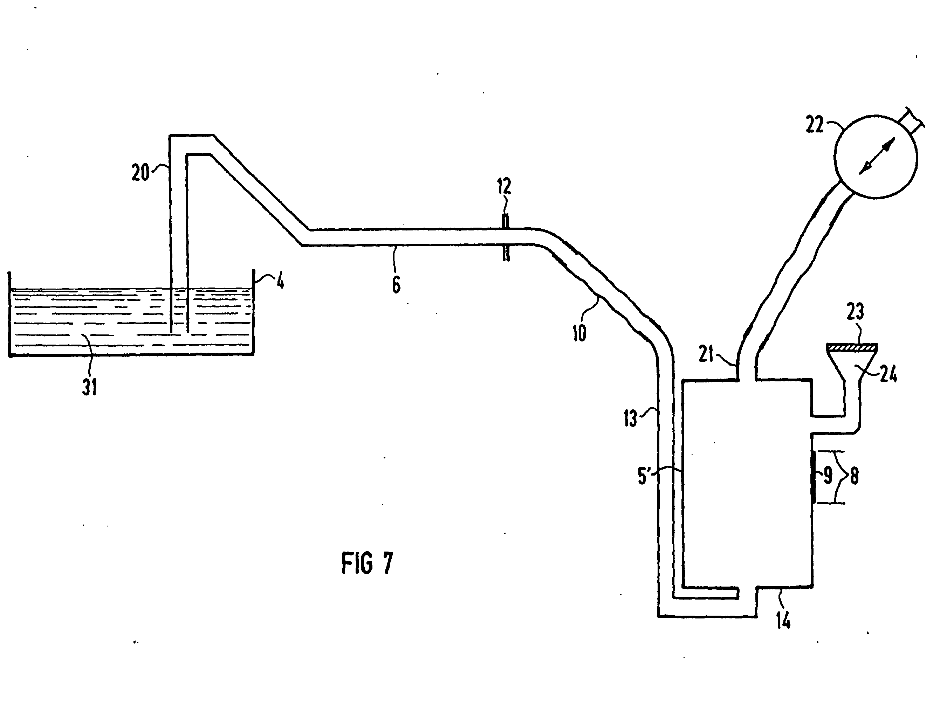

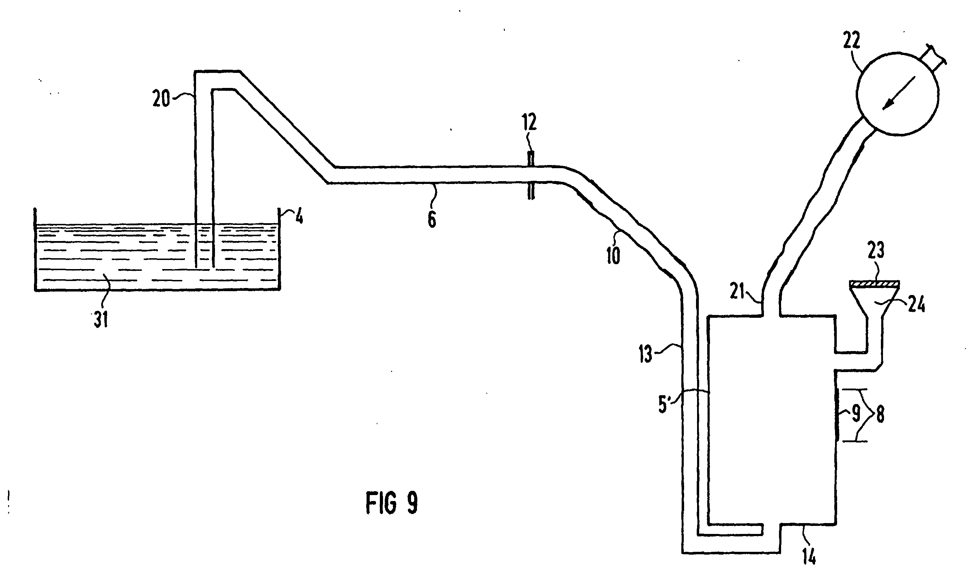

Bei dem Ausführungsbeispiel der Figuren 7 bis 9 ist in der Förderleitung 6 vom Getriebegehäuse 4 zur Pumpe 22 ein Kontrollbehälter 5' vorgesehen. Dabei weist der Kontrollbehälter 5' einen Anschlußstutzen 21 zu einer Druck- und Saugpumpe 22 auf. Ferner ist vorgesehen, daß der Kontrollbehälter 5' an der Ölnachfüllöffnung 7 einen durch einen Deckel 23 verschließbaren Nachfüllstutzen 24 aufweist.

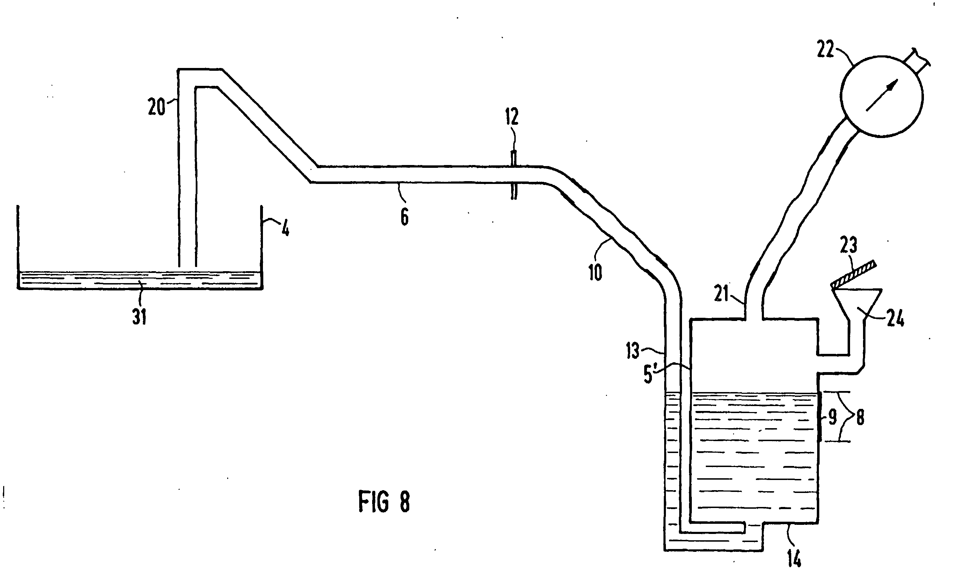

Gemäß den Figuren 7 und 8 wird bei an den Motor 1 angeschlcssener Ölstandskontrollvorrichtung zuerst bei abgeschlossenem Kontrollbehälter 5', wobei sich der Deckel 23 in der Schließlage befindet, die z.B. in beiden Drehrichtungen zum Saugen bzw. Drücken betreibbare Pumpe 22 zunächst als Saugpumpe betrieben.

Ist der Ölsumpf 31 im Getriebegehäuse 4 auf einen Stand abgesunken, daß der Endbogen 20 der Förderleitung 6 durch Ansaugen von Luft unwirksam wird, und wurde hierbei der Kontrollbehälter 5' bis zur Maximum-Markierung gefüllt, so ist die vorhandene Getriebeölmenge in Ordnung. Bei einer Überfüllung kann nach dem Abschalten der Pumpe 22 der Deckel 23 geöffnet und die überschüssige Ölmenge abgeschüttet oder abgezogen werden. Eine erforderliche Ölnachfüllung bis zur Maximum-Markierung erfolgt ebenfalls über den Nachfüllstutzen 24.

Nach Beendigung der Ölstandskontrolle wird der Deckel 23 wieder geschlossen und die Pumpe 22 mit der durch einen Pfeil gekennzeichneten Förderrichtung in Gang gesetzt. Hierauf wird das Öl aus dem Kontrollbehälter 5' und dem Förderleitungssystem zurück in das Getriebegehäuse 4 gedrückt. Nach dem Abschalten der Pumpe 22 kann durch Lösen und Verschließen der Kupplung 12 die Ölstandskontrollvorrichtung vom Motor 1 abgenommen werden.

## Patentansprüche

1. Vorrichtung zur Ölstandskontrolle bei elektromotorischen Antrieben (1) mit Getriebe (2), einer Pumpe (3,22) zum Ansaugen von Getriebeöl aus dem Getriebegehäuse (4), **dadurch gekennzeichnet, dass** die Pumpe zum Ansaugen des Getriebeöls aus dem Getriebegehäuse in einen Kontrollbehälter als auch zum Rückfördern des Getriebeöls vom Kontrollbehälter in das Getriebegehäuse nach der Ölstandsmessung eingerichtet ist, wobei der Kontrollbehälter eine Ölstandsanzeige aufweist.

2. Vorrichtung nach Anspruch 1, **dadurch gekennzeichnet, daß** das Gehäuse der Pumpe den Kontrollbehälter (5) bildet.

3. Vorrichtung nach Anspruch 1, **dadurch gekennzeichnet, daß** in einer Förderleitung (6) vom Getriebegehäuse (4) zur Pumpe (22) der Kontrollbehälter (5') vorgesehen ist.

4. Vorrichtung nach einem der Ansprüchen 1 bis 3, **dadurch gekennzeichnet, daß** der Kontrollbehälter (5, 5') eine Ölnachfüllöffnung (7) aufweist.

5. Vorrichtung nach einem der Ansprüchen 1 bis 3, **dadurch gekennzeichnet, daß** der Kontrollbehälter (5, 5') wenigstens teilweise aus durchsichtigem Material besteht oder ein Schauglas (9)aufweist.

6. Vorrichtung nach Anspruch 3, **dadurch gekennzeichnet, daß** der Kontrollbehälter (5, 5') bodenseitig über eine Anschlußleitung (10) mit der Förderleitung (6) zum Getriebegehäuse (4) verbunden ist.

7. Vorrichtung nach Anspruch 6, **dadurch gekennzeichnet, daß** die Förderleitung (6) zum Getriebegehäuse (4) am Motorgehäuse (11) über eine Kupplung (12) mit der Anschlußleitung (10) des Kontrollbehälters (5, 5') verbindbar ist.

8. Vorrichtung nach einem der Ansprüche **6 oder 7**, **dadurch gekennzeichnet, daß** die Anschlußleitung des Kontrollbehälters unterteilt ist in eine Steigleitung (13), die etwa die Höhe des Behälters (5, 5') aufweist und in den Behälterboden (14) mündet, sowie in ein von der Steigleitung zur Förderleitung (6) führendes Schlauchstück (10).

9. Vorrichtung nach einem der Ansprüche 1 bis 8, **dadurch gekennzeichnet, daß** im Kontrollbehälter (5) ein Kolben (15) mit Kolbenstange (16) sowie ein Ventil (17) zum Absperren und Belüften des Kontrollbehälters vorgesehen ist.

10. Vorrichtung nach Anspruch 9, **dadurch gekennzeichnet, daß** der Kontrollbehälter (5) über eine Bohrung (18) im Kolben (15) und die daran angesetzte hohe Kolbenstange (16) bei angesetztem geöffnetem Ventil (17) belüftbar ist.

11. Vorrichtung nach einem der Ansprüche 9 oder 10, **dadurch gekennzeichnet, daß** zum Zurückpumpen einer Restölmenge (19) aus dem Kontrollbehälter (5) in das Getriebegehäuse (4) bei belüftetem Behälter (5) und angehobenem Kolben (15) der Kolben mittels Kolbenstange (16) bei geschlossenem Ventil (17) in die Bodenlage drückbar ist.

12. Vorrichtung nach Anspruch 3 oder nach einem der Ansprüche 6 bis 8, **dadurch gekennzeichnet, daß** die Förderleitung (6) am getriebeseitigen Ende einen Endbogen (20) aufweist und über diesen in den Ölsumpf des Getriebegehäuses (4) eintaucht.

13. Vorrichtung nach Anspruch 3, **dadurch gekennzeichnet, daß** der Kontrollbehälter (5') einen Anschlußstutzen (21) zu einer Druck- und Saugpumpe (22) aufweist.

14. Vorrichtung nach Anspruch 4, **dadurch gekennzeichnet, daß** der Kontrollbehälter (5') an der Ölnachfüllöffnung (7) einen durch einen Deckel (23) verschließbaren Nachfüllstutzen (24) aufweist.

## Claims

1. Device for oil level checking in electric motor drives (1) with gearing mechanism (2), a pump (3, 22) for drawing gear oil from the gearbox (4), **characterized in that** the pump is set up to draw the gear oil from the gearbox into an inspection tank and to return the gear oil from the inspection tank to the gearbox after oil level measurement, the inspection tank having an oil level gauge.

2. Device according to claim 1, **characterized in that** the pump housing forms the inspection tank (5).

3. Device according to claim 1, **characterized in that** the inspection tank (5') is provided in a feed pipe (6) from the gearbox (4) to the pump (22).

4. Device according to one of the claims 1 to 3, **characterized in that** the inspection tank (5, 5') has an oil top-up hole (7).

5. Device according to claims 1 to 3, **characterized in that** the inspection tank (5, 5') consists at least in part of transparent material or has a sight glass (9).

6. Device according to claim 3, **characterized in that**, at the bottom, the inspection tank (5, 5') is connected to the feed pipe (6) to the gearbox (4) by a connecting hose (10).

7. Device according to claim 6, **characterized in that** the feed pipe (6) to the gearbox (4) on the motor housing (11) can be connected to the connecting hose (10) of the inspection tank (5, 5') via a coupling (12).

8. Device according to one of the claims 6 or 7, **characterized in that** the connecting pipe of the inspection tank is subdivided into a riser pipe (13) having approximately the same height as the tank (5, 5') and opening into the tank bottom (14), and a hose piece (10) leading from the riser pipe to the feed pipe (6).

9. Device according to one of the claims 1 to 8, **characterized in that** there is provided in the inspection tank (5) a plunger (15) with plunger rod (16) and a valve (17) for shutting off and aerating the inspection tank.

10. Device according to claim 9, **characterized in that** the inspection tank (5) can be aerated via a bore (18) in the plunger (15) and the hollow plunger rod (16) attached thereto when the valve (17) is open.

11. Device according to one of the claims 9 or 10, **characterized in that**, to pump any residual oil (19) from the inspection tank (5) back into the gearbox (4) with the tank (5) aerated and the plunger (15) lifted, the plunger (15) can be pushed down to the bottom position by means of the plunger rod (16) with the valve (17) closed.

12. Device according to claim 3 or one of the claims 6 to 8, **characterized in that** the feed pipe (6) has an end bend (20) at the gear mechanism end and dips into the oil sump of the gearbox (4) via said bend.

13. Device according to claim 3, **characterized in that** the inspection tank (5') has a connection (21) to a suction and force pump (22).

14. Device according to claim 4, **characterized in that**, at the oil top-up hole (7), the inspection tank (5') has a filler neck (24) sealable by a cover (23).

## Revendications

1. Dispositif de contrôle du niveau de l'huile dans des dispositifs (1) d'entraînement par moteur électrique, comprenant des transmissions (2), une pompe (3, 22) d'aspiration de l'huile de transmission du carter (4) de transmission, **caractérisé en ce que** la pompe est montée tant pour aspirer l'huile de transmission du carter de transmission dans une cuve de contrôle que pour retourner l'huile de transmission de la cuve de contrôle au carter de transmission après la mesure du niveau d'huile, la cuve de contrôle comportant une indication du niveau d'huile.

2. Dispositif suivant la revendication 1,
**caractérisé en ce que** le corps de la pompe forme la cuve (5) de contrôle.

3. Dispositif suivant la revendication 1,
**caractérisé en ce que** la cuve (5') de contrôle est prévue dans un conduit (6) allant du carter (4) de transmission à la pompe (22).

4. Dispositif suivant l'une des revendications 1 à 3, **caractérisé en ce que** la cuve (5, 5') de contrôle a une ouverture (7) de remplissage d'huile.

5. Dispositif suivant l'une des revendications 1 à 3, **caractérisé en ce que** la cuve (5, 5') de contrôle est constituée au moins en partie d'un matériau transparent ou a un hublot (9).

6. Dispositif suivant la revendication 3,
**caractérisé en ce que** la cuve (5, 5') de contrôle communique du côté du fond par un conduit (10) de raccordement avec le conduit (6) menant au carter (4) de transmission.

7. Dispositif suivant la revendication 6,
**caractérisé en ce que** le conduit (6) menant au carter (4) de transmission peut être mis en communication sur le carter (11) du moteur par un accouplement (12) avec le conduit (10) de raccordement de la cuve (5, 5') de contrôle.

8. Dispositif suivant l'une des revendications 6 ou 7, **caractérisé en ce que** le conduit de raccordement de la cuve de contrôle est subdivisé en un conduit (13) ascendant qui a à peu près la hauteur de la cuve (5, 5') et qui débouche dans le fond (14) de la cuve ainsi qu'en un tronçon (10) souple menant du conduit ascendant au conduit (6).

9. Dispositif suivant l'une des revendications 1 à 8, **caractérisé en ce qu**'il est prévu dans la cuve (5) de contrôle un piston (15) ayant une tige (16) de piston, ainsi qu'une vanne (17) de fermeture et de mise à l'atmosphère de la cuve de contrôle.

10. Dispositif suivant la revendication 9,
**caractérisé en ce que** la cuve (5) de contrôle peut être mise à l'atmosphère par un alésage (18) ménagé dans le piston (15) et par la haute tige (16) de piston qui y est mise lorsque la vanne (17) qui y est mise est ouverte.

11. Dispositif suivant l'une des revendications 9 ou 10, **caractérisé en ce que** pour repomper une quantité (19) restante d'huile de la cuve (5) de contrôle dans le carter (4) de transmission, lorsque la cuve (5) est mise à l'atmosphère et lorsque le piston (15) est soulevé, le piston peut être poussé au moyen de la tige (16) de piston, alors que la vanne (17) est fermée, dans la couche de fond.

12. Dispositif suivant la revendication 3 ou l'une des revendications 6 à 8, **caractérisé en ce que** le conduit (6) comporte à l'extrémité du côté de la transmission un coude (20) d'extrémité et plonge par celui-ci dans le bain d'huile du carter (4) de transmission.

13. Dispositif suivant la revendication 3,
**caractérisé en ce que** la cuve (5') de contrôle a une tubulure (21) de raccordement allant à une pompe (22) de refoulement et d'aspiration.

14. Dispositif suivant la revendication 4,
**caractérisé en ce que** la cuve (5') de contrôle a, sur l'ouverture (7) de remplissage d'huile, une tubulure (24) de remplissage qui peut être fermée par un couvercle (23).
